# EUROPEAN PATENT SPECIFICATION

(11) **EP 0 988 793 B1**
(45) Date of publication and mention of the grant of the patent: **29.05.2002**
(21) Application number: 99307234.7
(22) Date of filing: 13.09.1999
(51) Int. Cl.: A23C 11/10

(54) **Process for producing lactic acid-fermented soybean milk**
Verfahren zur Herstellung von mit Milchsäurebakterien gesäuerter Milch
Procédé de préparation de lait de soja de fermentation lactique

(30) Priority: 21.09.1998 JP 26587698
(43) Date of publication of application: 29.03.2000
(73) Proprietor: FUJI OIL COMPANY, LIMITED, Osaka-shi, Osaka-fu 542 (JP)
(72) Inventor: Yokoyama, Hitoshi, c/o Fuji Oil Company Limited, Izumisano-shi, Osaka-fu (JP); Miyata, Keiji, c/o Fuji Oil Company Limited, Izumisano-shi, Osaka-fu (JP); Nishimura, Takashi, c/o Fuji Oil Company Limited, Izumisano-shi, Osaka-fu (JP); Tsumura, Haruo, c/o Fuji Oil Company Limited, Izumisano-shi, Osaka-fu (JP)
(74) Representative: Baverstock, Michael George Douglas

(56) References cited:
- PATENT ABSTRACTS OF JAPAN vol. 008, no. 172 (C-237), 9 August 1984 (1984-08-09) & JP 59 071641 A (TSUNE KAWAHARA), 23 April 1984 (1984-04-23)
- CHENG Y J ET AL: "SOGURT, A YOGURT-LIKE SOYBEAN PRODUCT: DEVELOPMENT AND PROPERTIES" JOURNAL OF FOOD SCIENCE,US,INSTITUTE OF FOOD TECHNOLOGISTS. CHICAGO, vol. 55, no. 4, page 1178-1179 XP000159987 ISSN: 0022-1147
- PATENT ABSTRACTS OF JAPAN vol. 004, no. 077 (C-013), 4 June 1980 (1980-06-04) & JP 55 042543 A (ONOZUKA YUICHIRO), 25 March 1980 (1980-03-25)
- PATENT ABSTRACTS OF JAPAN vol. 009, no. 205 (C-299), 22 August 1985 (1985-08-22) & JP 60 075234 A (TOSHIYUKI OOTA;OTHERS: 01), 27 April 1985 (1985-04-27)
- KARLESKIND D ET AL: "IMPROVING ACID PRODUCTION IN SOY-BASED YOGURT BY ADDING CHEESE WHEY PROTEINS AND MINERAL SALTS" JOURNAL OF FOOD SCIENCE,US,INSTITUTE OF FOOD TECHNOLOGISTS. CHICAGO, vol. 56, no. 4, page 999-1001 XP000237475 ISSN: 0022-1147

## Description

The present invention relates to a process for producing lactic acid-fermented soybean milk.

As interest in health has increased, recently, vegetable proteinaceous food products have been appreciated. In particular, soybean milk attracts the attention of people as high proteinaceous health food because soybean milk made from soybeans contains protein of such good quality that it is called "meat harvested in a field", and does not contain cholesterol.

However, soybean milk made from soybeans has a drawback of unpleasant flavor such as grassy-smelling, and acridity, due to minor components of soybeans such as 2-hexanal, and several saponins. Therefore, for utilizing soybean milk, its unpleasant flavor should be improved and various methods have been proposed to improve a flavor of soybean milk by lactic acid fermentation with lactic acid bacteria (e.g., JP-A 61-141840, JP-A 62-205735, JP-A 63-7743, JP-A 2-167044, JP-A 6-276979, JP-A 8-66161, etc.).

According to these known methods, the unique unpleasant flavor of soybean milk can be reduced and removed by the fermentation. However, there are other problems such as loss of smooth texture of a coagulated mass formed by the fermentation, and a strong aftertaste.

On the other hand, a soybean protein coagulating agent (hereinafter simply referred to as a coagulant) can be used to improve the flavor of soybean milk because tofu (soybean curd) made from soybean milk with a coagulant according to a traditional method has an excellent flavor. However, when such a coagulant (e.g., bittern, a salt or hydroxide of alkaline earth metal such as magnesium, or calcium) is added to soybean milk to improve flavor, there are different problems such as increase in viscosity and formation of a tofu-like coagulated mass due to aggregation of protein in soybean milk. Therefore, in order to solve these problems, various methods have been proposed (e.g., JP-A 52-90662, JP-A 53-96356, JP-A 54-95771, JP-A 59-173044, JP-A 61-25458, and JP-A 5-308900).

However, these latter known methods are directed to the production of soybean milk itself and do not teach any lactic acid fermentation of soybean milk which has been obtained by adding a coagulant to starting soybean milk, followed by heating and homogenizing of the resultant mixture of the starting soybean milk and the coagulant.

Also, it is still desired to develop lactic-acid fermented soybean milk which is free from undesired bean flavor and bitterness, and having a smooth texture and a refreshing aftertaste.

As described above, the unique unpleasant flavor of soybean milk can be reduced and removed by lactic acid fermentation. However, the problem is loss of smooth texture of a coagulated mass formed by lactic acid fermentation. Although enzymatic decomposition of the coagulated mass can be employed to solve this problem, another problem such as bitterness is caused.

The main object of the present invention is to provide a process for producing lactic acid-fermented soybean milk having a good flavor, a smooth mouthfeel and a refreshing aftertaste.

This objective as well as other objectives and advantages of the present invention will become apparent to those skilled in the art from the following description.

In order to attain the above objectives of the present invention, the present inventors have studied a process for producing lactic acid-fermented soybean milk, intensively. As a result, it has been found that gelation capability of soybean protein is closely related to the texture of lactic acid-fermented soybean milk. Then, the present inventors have further studied to control gelation capability of soybean protein. As a result, it has been further found that the desired lactic acid-fermented soybean milk having a good flavor and a smooth texture can be obtained by lactic acid fermentation of soybean milk which has been obtained by adding a coagulant to starting soybean milk, followed by heating and then homogenizing the resultant mixture of the starting soybean milk and the coagulant. Thus, the present invention has been accomplished.

That is, according to the present invention, there is provided a process for producing lactic acid-fermented soybean milk which comprises adding a coagulant to starting soybean milk, heating the starting soybean milk containing the coagulant at 70°C to 150°C for 1 second to 10 minutes, homogenizing the heated soybean milk and then subjecting the homogenized soybean milk to lactic acid fermentation. Preferably, the coagulant is one or more members selected from bittern, salts and hydroxides of alkaline earth metals, and gluconic δ-lactone. The coagulant is preferably added in an amount of 2% to 8% by weight based on the crude protein content of the starting soybean milk. The heating is preferably carried out by a direct high-temperature short-time or ultra-high temperature method at 120°C to 150°C for 2 seconds to 10 seconds. The homogenization is preferably carried out under pressure of 5 kg/cm² to 200 kg/cm². The resultant fermented soybean milk preferably has a pH of 3.5 to 5.0

The starting soybean milk used in the present invention is not limited to a specific one, and can be obtained from, for example, soybeans or defatted soybeans according to a conventional method. Preferably, dehulled and hypocotyl-removed soybeans, or soybeans whose enzymes have been inactivated by heating are used because starting soybean milk having a better flavor can be obtained.

For example, whole soybeans or dehulled soybeans are soaked in water or are hydrated without soaking, followed by grinding to obtain a puree or slurry. An insoluble fraction is removed from the puree or slurry for example by filtration to obtain the starting soybean milk. Preferably, whole soybeans, dehulled soybeans, or dehulled and hypocotyl-removed soybeans are allowed to contact warm or hot water at 50°C to 100°C to remove components which are soluble in the warm or hot water. Then, the soybeans are ground, followed by removing the insoluble fraction.

Preferably, the starting soybean has a pH of 7 to 8 because the pH is reduced by addition of a coagulant. When the pH of the starting soybean milk is too low, soybean protein is liable to be denatured, which causes a rough texture after treatment with the coagulant.

The coagulant to be used in the present invention is selected from natural bittern (made from sea water in a salt pan), salts and hydroxides of alkaline earth metals, for example, magnesium hydroxide, magnesium salts (e.g., magnesium chloride or magnesium sulfate, calcium hydroxide, calcium salts (e.g., calcium sulfate, calcium chloride, calcium lactate or whey calcium) and gluconic δ-lactone. They can be used alone or in combination.

All the above coagulants are recognized to be useful for reducing grassy-smelling, bitterness and the harsh taste of soybean milk. Among them, bittern and magnesium salts are more effective than calcium salts from the viewpoint that a rich flavor such as a milky flavor can be given to soybean milk. In comparison with the other magnesium salts and calcium salts, gluconic δ-lactone has less flavor-improving effect and, therefore, the latter is preferably used in combination with the other magnesium salts and calcium salts. Further, an organic acid such as fumaric acid can be used instead of gluconic δ-lactone.

The amount of the coagulant to be used in the present invention varies according to the particular kind of coagulant. However, normally, the coagulant as a salt is added in an amount of 1% to 4% by weight based on the solids content of the starting soybean milk, and 2% to 8% by weight based on the crude protein content of the starting soybean milk. When the amount of the coagulant is less than 2% by weight based on the crude protein content of the starting soybean milk, the reducing effect on grassy-smelling, bitterness and the harsh taste of soybean milk cannot be expected. On the other hand, when the amount of the coagulant is more than 8% by weight, the coagulant causes an acrid taste. In addition, the pH of the soybean milk is reduced which results in flavor deterioration and too much coagulation of the soybean milk. The latter causes difficulty in the subsequent homogenization step. With a view to improvement of flavor, 3% to 7% by weight based on the crude protein content of the starting milk is preferred.

The coagulant can be added any time before the heating step. However, when the coagulant is added in such an amount that a tofu-like coagulated mass is formed in the soybean milk, after addition of the coagulant, preferably, stirring is continued until pre-homogenization to prevent separation of the soybean milk into a coagulated mass part and a supernatant part to facilitate the subsequent heating.

Pre-homogenization is not necessarily required so long as the coagulated mass formed by addition of the coagulant to the starting soybean milk does not cause any difficulty in treatment by the subsequent heating step. However, preferably, the starting soybean milk to which the coagulant has been added is subjected to pre-homogenization. For pre-homogenization, any known homogenizing means such as a homogenizer can be employed. Preferably, pre-homogenization is carried out under a pressure of 10 kg/cm² to 100 kg/cm².

Heating in the present invention is carried out at a temperature at which the reaction of the coagulant with the starting soybean milk is promoted, i.e., at 70°C or higher. Preferably, heating is carried out by a direct high-temperature short-time method with steam. When the heating temperature is lower than 70°C, the reaction of the coagulant with the soybean milk is insufficient and improvement of flavor and mouthfeel is not expected.

It is presumed that this heat treatment contributes to (1) prevention of re-aggregation upon reheating the soybean milk thus treated, and (2) improvement of flavor of the treated soybean milk by means of (a) lowering of viscosity and the finely divided coagulated mass brought about by further denaturation of soybean protein at a high temperature under high pressure upon mixing the coagulated soybean milk with steam at a steam injection part, and (b) deodorant effect brought about by pressure reduction in a flash pan during this heat treatment.

Normally, the treatment by a direct high-temperature short-time or ultra-high temperature method is carried out at 120°C to 150°C for 1 second to 10 minutes, preferably 2 seconds to 10 seconds.

In the present invention, after heating, the heated soybean milk is subjected to homogenization. Homogenization can be carried out by any known homogenization means such as a homogenizer. Preferably, homogenization can be carried out with a pressure homogenizer under a pressure of, for example, 5 kg/cm² to 200 kg/cm².

This homogenization greatly affects mouthfeel of lactic acid-fermented soybean milk obtained by lactic acid fermentation and, when this homogenization is not carried out or carried out under a pressure of lower than 5 kg/cm², the resultant lactic acid-fermented soybean milk has a rough mouthfeel and loses refreshing aftertaste.

For lactic acid fermentation of the starting soybean milk containing the coagulant thus obtained, addition of saccharides assimilable by lactic acid bacteria (e.g., oligosaccharides ) are not necessarily required. However, addition of such saccharides promotes lactic acid fermentation to obtain lactic acid-fermented soybean milk having an excellent flavor.

Lactic acid bacteria used for the lactic acid fermentation of the present invention are not limited to a specific one and any lactic acid bacteria can be used as far as they are used for fermentation of conventional yogurt. Examples of lactic acid bacteria to be used include known strains such as *Lactobacillus bulgaricus, Lactobacillus acidophilus, Lactobacillus case, Streptococcus thermophilus, Streptococcus lactis* and *lactic* acid bacteria belonging to the genus *Bifidobacterium*.

These lactic acid bacteria can be used alone or in combination,

Lactic acid fermentation can be carried out by preparing a balk starter and adding it to the homogenized soybean milk. Alternatively, a frozen concentrated culture or a freeze-dried concentrated culture can be added to the homogenized soybean milk directly. The amount of the starter or culture can be adjusted according to fermentation temperature and time.

Preferably, fermentation is carried out at 20°C to 50°C for 3 hours to 48 hours, more preferably, at 25°C to 45°C for 4 hours to 24 hours. The fermented soybean milk thus obtained is preferably at pH 3.5 to 5.0, more preferably pH 4.0 to 4.5.

The lactic acid-fermented soybean milk of the present invention includes the thus-obtained lactic acid-fermented soybean milk and further processed products thereof. For example, the lactic acid-fermented soybean milk thus obtained can be stirred, cooled and then filled into a container directly to obtain a soft type yogurt-like lactic acid-fermented soybean milk product. Alternatively, the lactic acid-fermented soybean milk can be further subjected to homogenization and then cooled to obtain a drink yogurt type lactic acid-fermented soybean milk product. If necessary, additives such as fats and oils and various flavors, colorants, and stabilizers can be added to the lactic acid-fermented soybean milk. Moreover, fruit preparations can be added to the lactic acid fermented soybean milk to obtain various fruit type flavored products.

The following examples further illustrate the present invention in detail, but are not to be construed to limit the scope thereof. In the following examples, all the parts and percents are by weight unless otherwise stated.

### Example 1

Water (10 parts) was added to dehulled and hypocotyl-removed soybeans (1 part) and the soybeans were soaked in the water at 30°C to 50°C for more than 60 hours to obtain dehulled and hypocotyl-removed soybeans which absorbed sufficient water (water content: 40% to 55%). Hot water (3 parts, 90°C) was added to the dehulled and hypocotyl-removed soybeans in the hydrated state (1 part) and the mixture was treated with a grinder (manufactured by Masuko Sangyo) to obtain puree. To the puree was added an aqueous sodium bicarbonate solution to adjust to pH 7.4 to 8.0. Then, the puree was fed to a homogenizer (manufactured by APV) and homogenized under a pressure of 170 kg/cm². The resultant homogenate was centrifuged at 3,000 G for 5 minutes to separate into starting soybean milk and "okara" (insoluble residue known as soy pulp), The starting soybean milk had a solids content of 9.0%, and a protein content of 4.5% and the pH was 7.5.

To the starting soybean milk was added sea pan-bittern (manufactured by Ako Kasei), magnesium chloride (manufactured by Kishida Kagaku, food additive grade), or calcium sulfate (manufactured by Kishida Kagaku, food additive grade) to evaluate the difference in flavors of soybean milk containing different coagulants.

The starting soybean milk was heated to 80°C. To this was added an aqueous solution or dispersion of each coagulant and the mixture was stirred. After standing at 80°C for 5 minutes as it was, the mixture was cooled to 70°C and homogenized under pressure of 100 kg/cm².

Commercially available lactic acid bacteria (freeze-dried culture), *Lactobacillus bulgaricus, Streptococcus thermophilus,* and *Bifidobacterium longum* were cultured individually. Each culture as a starter was added to the above-prepared homogenized soybean milk in an amount of 1% and the soybean milk was fermented in a culture tank at 40°C for 7 hours. Then, the soybean milk was cooled with stirring to 7°C to obtain a lactic acid-fermented soybean milk. The fermented soybean milk had a pH of 4.3.

By addition of the coagulant, the grassy-smell, bitterness and harsh taste of the lactic acid-fermented soybean milk obtained were masked and a rich flavor was given to the fermented soybean milk. When the coagulant was added in an amount of 2.0% by weight based on the solids content of the starting soybean milk (about 4% based on the crude protein content of the soybean milk), the fermented soybean milk tasted even milky. When the coagulant was added in an amount of 3.5% by weight of the coagulant based on the solids content of the starting soybean milk (about 7% based on the crude protein content of the soybean milk), the fermented soybean milk had a tofu-like taste with a slightly harsh taste of the coagulant. However, when the coagulant was added in an amount less than 1.0% based on the solids content of the starting soybean milk (less than about 2% based on the crude protein content of the soybean milk), a masking effect was scarcely expected. When the coagulant was added in an amount of more than 4.0% based on the solids content of the starting soybean milk (more than about 8% based on the crude protein content of the soybean milk), the fermented soybean milk tasted acrid because of the coagulant and no improvement of flavor was found.

In addition, viscosity and particle sizes of soybean milk before fermentation were different from each other. When the amount of the coagulant added was 2.0% based on the solids content of the starting soybean milk or less, viscosity and particle size of the soybean milk were almost the same as those of the soybean milk without addition of the coagulant and workability was very good. However, when the amount became more than 3%, increase in viscosity and particle size was recognized. When the amount became 4.5%, the soybean milk became a paste and workability was very bad.

Regarding the flavor of the end product after fermentation, the soybean milk using bittern or magnesium chloride tasted very good. The soybean milk using calcium sulfate was somewhat inferior to those obtained using the other coagulants from the viewpoint of rich flavor. Regarding mouthfeel, there was little difference between the coagulants used and, even when the coagulant was added in an amount of 2% to 3.5%, the fermented soybean milk was smooth and had a refreshing aftertaste without any rough mouthfeel. When the amount was 4.5%, the fermented soybean milk was smooth, but rough mouthfeel was caused and the product was bad.

The results are summarized in Tables 1 and 2. In Table 1, viscosity was measured by a Brookfield viscometer (BM model) at 10°C. The particle size was measured by a laser diffraction size distribution measurement device LA 500 (manufactured by Horiba Seisakusho). In Table 2, the flavor and mouthfeel of the resultant lactic acid-fermented soybean milk was evaluated by panelists organoleptically based on the following criteria.
A: very good
B: good
C: ordinary
D: bad

**Table 1**

| Physical properties of soybean milk treated by coagulant (before lactic acid fermentation) | | | | |
|---|---|---|---|---|
| Coagulant | Amount of coagulant (%) | pH (15°C) | Viscosity (cps) | Particle size (µm) |
| without addition | - | 7.50 | 11 | 0.98 |
| bittern | 0.8 | 7.30 | 11 | 1.00 |
| | 2.0 | 7.03 | 12 | 1.07 |
| | 3.5 | 6.90 | 270 | 9.49 |
| | 4.5 | 6.83 | * | - |
| MgCl₂ | 0.8 | 7.34 | 11 | 1.00 |
| | 2.0 | 6.97 | 13 | 1.10 |
| | 3.5 | 6.87 | 315 | 10.21 |
| | 4.5 | 6.81 | * | - |
| CaSO₄ | 0.8 | 7.30 | 11 | 1.00 |
| | 2.0 | 6.88 | 14 | 2.13 |
| | 3.5 | 6.77 | 1740 | 14.98 |
| | 4.5 | 6.70 | * | - |

| | | | | |
|---|---|---|---|---|
| *: paste, unmeasurable | | | | |

**Table 2**

| Flavor and physical properties of soybean milk after lactic acid fermentation | | | |
|---|---|---|---|
| Coagulant | Amount of coagulant (%) | Flavor | Mouthfeel |
| without addition | - | C | C |
| bittern | 0.8 | C; the same as that of without addition | C; the same as that of without addition (viscous after-taste) |
| | 2.0 | A; rich, milky | B; smooth, refreshing aftertaste |
| | 3.5 | B; tofe-like, slightly harsh | B; smooth, refreshing aftertaste |
| | 4.5 | D; tofe-like, harsh | D; rough |
| MgCl₂ | 0.8 | C; the same as that of without addition | C; the same as that of without addition (viscous after-taste) |
| | 2.0 | A; rich, milky | B; smooth, refreshing aftertaste |
| | 3.5 | B; tofe-like, slightly harsh | B; smooth, refreshing aftertaste |
| | 4.5 | D; tofe-like harsh | D; rough |
| CaSO₄ | 0.8 | C; the same as that of without addition | C; the same as that of without addition (viscous after-taste) |
| | 2.0 | B; rich, slightly harsh | B; smooth, refreshing aftertaste |
| | 3.5 | B; tofe-like, slightly harsh | B; smooth, refreshing aftertaste |
| | 4.5 | D; tofe-like, harsh | D; rough |

### Example 2

### Heating conditions by direct high temperature-short-time method with steam

According to the same manner as described in Example 1, starting soybean milk was prepared and it was heated to 60°C. Then, magnesium chloride (manufactured by Kishida Kagaku, food additive grade) dissolved in water was added to the starting soybean milk in an amount of 2.0% or 3.5% based on the solids content of the soybean milk (about 4% or 7% based on the crude protein content of the soybean milk). The mixture was stirred and sterilized by heating according to a direct ultra-high temperature method with steam under the conditions of 142°C for 2 seconds or 4 seconds. After heating, the soybean milk was homogenized with a homogenizer under a pressure of 100 kg/cm².

Commercially available lactic acid bacteria (freeze-dried culture), *Lactobacillus bulgaricus,* and *Streptococcus thermophilus* were cultured individually. Each culture as a starter was added to the above-prepared homogenized soybean milk in an amount of 1% and the soybean milk was fermented in a culture tank at 40°C for 7 hours. Then, the soybean milk was cooled with stirring to 7°C to obtain a lactic acid-fermented soybean milk. The fermented soybean milk was at pH 4.0.

When the amount of the coagulant added was 2.0% based on the solids content of the soybean milk, no difference was observed between the heating time of 2 seconds and that of 4 seconds. However, when the amount of the coagulant added was 3.5% based on the solids content of the soybean milk, a difference in reactivity was observed between the heating time of 2 seconds and that of 4 seconds. Specifically, in the case of a heating time of 2 seconds, viscosity and particle size were not reduced to those in the case of a heating time of 4 seconds and viscosity remained higher.

Difference in flavors were observed according to the heating method and heating time. In general, there was a tendency that flavor was degraded as heating conditions became more severe. Regarding refreshing aftertaste, there was a tendency that refreshing aftertaste was increased in the case of a direct ultra-high temperature method with steam, though aftertaste varied depending upon heating conditions.

The results are summarized in Table 3. In Table 3, viscosity was measured by a Brookfield viscometer (BM model) at 10°C. The particle size was measured by a laser diffraction size distribution measurement device LA 500 (manufactured by Horiba Seisakusho). The flavor and mouthfeel of the resultant lactic acid-fermented soybean milk was evaluated by panelists organoleptically based on the following criteria.
A: very good
B: good
C: ordinary
D: bad

**Table 3**

| Relation between heating conditions and change in flavor and physical properties | | | | | | |
|---|---|---|---|---|---|---|
| Amount of MgCl₂ (%) | 2.0 | | 3.5 | | 2.0* | 2.0** |
| Heating method | Direct heating with steam | | | | Indirect heating | Without heating |
| Heating temp. (°C) | 140 | 140 | 140 | 140 | 80 | 25 |
| Heating time (sec.) | 2 | 4 | 2 | 4 | 300 | - |
| Viscosity (cps) | 10.0 | 10.0 | 45.0 | 11.0 | 13 | 6 |
| Particle size (µm) | 0.84 | 0.81 | 5.53 | 3.10 | 1.10 | 0.7 |
| Flavor of fermented milk | A | A | B | B | A | C |
| Mouthfeel of fermented milk | A-B smooth, very refreshing | | B somewhat less refreshing flavor | | B | D viscous after-taste |

| | | | | | | |
|---|---|---|---|---|---|---|
| *: Example 1, **: Comparative Example | | | | | | |

### Example 3

### Effect of homogenization pressure

Effect of homogenization pressure after heat treatment on a mouthfeel of lactic acid-fermented soybean milk was examined.

Commercially available soybean milk without any adjustment of ingredients was heated to 80°C and magnesium chloride (manufactured by Kishida Kagaku, food additive grade) dissolved in water was added thereto in an amount of 2.0% or 3.5% based on the solids content of the soybean milk (about 4% or 7% based on the crude protein content of the soybean milk). The mixture was stirred, heated at 80°C for 5 minutes and then homogenized with a homogenizer under pressured of 50 kg/cm², 100 kg/cm² or 150 kg/cm².

Commercially available lactic acid bacteria, *Lactobacillus bulgaricus,* and *Streptococcus thermophilus,* were cultured individually. Each culture as a starter was added to the above-prepared homogenized soybean milk in an amount of 1% and the soybean milk was fermented in a culture tank at 40°C for 7 hours. Then, the soybean milk was cooled with stirring to 7°C to obtain a lactic acid-fermented soybean milk. The fermented soybean milk was at pH 4.0.

Decrease in viscosity and the particle size were observed in all the homogenization pressure conditions of 50 kg/cm², 100 kg/cm² and 150 kg/cm² and, in comparison with a homogenization pressure of 0 kg/cm², there was difference in refreshing aftertaste. In the case of a homogenization pressure of 0 kg/cm², the fermented soybean milk was rough to the tongue.

Further, differences in flavor, mouthfeel, and physical properties were also recognized according to differences in amounts of coagulant.

The results are summarized in Tables 4 and 5. In Tables 4 and 5, viscosity was measured by a Brookfield viscometer (BM model) at 10°C. The particle size was measured by a laser diffraction size distribution measurement device LA 500 (manufactured by Horiba Seisakusho). The flavor and mouthfeel of the resultant lactic acid-fermented soybean milk was evaluated by panelists organoleptically based on the following criteria.
A: very good
B: good
C: ordinary
D: bad

**Table 4**

| Change in flavor and physical properties according to homogenization conditions | | | | |
|---|---|---|---|---|
| Amount of MgCl₂ (%) | 2.0 | | | |
| Pressure (kg/cm²) | 0 | 50 | 100 | 150 |
| Viscosity (cps) | 13 | 9.5 | 10.0 | 9.0 |
| Particle size (µm) | 0.94 | 0.82 | 0.81 | 0.76 |
| Flavor of fermented milk | A | A | A | A |
| Mouthfeel of fermented milk | C less refreshing, powdery | B | B | B |

**Table 5**

| Change in flavor and physical properties according to homogenization conditions | | | | |
|---|---|---|---|---|
| Amount of MgCl₂ (%) | 3.5 | | | |
| Pressure (kg/cm²) | 0 | 50 | 100 | 150 |
| Viscosity (cps) | 18 | 12.0 | 11.0 | 10.5 |
| Particle size (µm) | 4.42 | 3.41 | 3.30 | 2.98 |
| Flavor of fermented milk | A | A | A | A |
| Mouthfeel of fermented milk | D slightly rough | B | B | B |

### Example 4

### Processed fermented soybean milk

According to the same manner as described in Example 3 (homogenization pressure 100 kg/cm²), lactic acid-fermented soybean milk was prepared and the soybean milk was further homogenized with a mixer. To this were added strawberry jam (32 Brix, 16 parts), gelatin (0.5 part) and an appropriate amount of yogurt flavor to obtain a fruit yogurt type product. The product had a pH 4.0.

In comparison with a product obtained without treatment of the coagulant, this yogurt type product tasted milky and rich and had a smooth mouthfeel and a refreshing aftertaste.

As described hereinabove, according to the present invention, in comparison with conventional lactic acid-fermented soybean milk, the lactic acid-fermented soybean milk of the present invention has not only a good flavor and a smooth mouthfeel but also a very refreshing aftertaste.

## Claims

1. A process for producing lactic acid-fermented soybean milk which comprises adding a soybean protein coagulating agent to starting soybean milk, heating the starting soybean milk containing the coagulating agent at 70°C to 150°C for 1 second to 10 minutes, homogenizing the heated soybean milk and then subjecting the homogenized soybean milk to lactic acid fermentation.

2. The process according to claim 1, wherein the coagulating agent is one or more members selected from bittern, salts and hydroxides of alkaline earth metals, and gluconic δ-lactone.

3. The process according to claim 1, wherein the coagulating agent is added in an amount of 2% to 8% by weight based on the crude protein content of the starting soybean milk.

4. The process according to claim 1, wherein the heating is carried out by a direct high-temperature short-time or ultra-high temperature method at 120°C to 150°C for 2 seconds to 10 seconds.

5. The process according to claim 1, wherein the homogenization is carried out under a pressure of 5 kg/cm² to 200 kg/cm².

6. The process according to claim 1, wherein the fermented soybean milk has a pH of 3.5 to 5.0.

## Patentansprüche

1. Verfahren zur Herstellung von Milchsäurefermentierter Sojabohnenmilch, umfassend: Zugeben eines Sojabohnenprotein-Gerinnungsmittels zu Ausgangs-Sojabohnenmilch, Erwärmen der Ausgangs-Sojabohnenmilch, die das Gerinnungsmittel enthält, bei 70 bis 150°C für 1 Sekunde bis 10 Minuten, Homogenisieren der erwärmten Sojabohnenmilch und dann Unterwerfen der homogenisierten Sojabohnenmilch einer Milchsäurefermentation.

2. Verfahren gemäss Anspruch 1, worin das Gerinnungsmittel eines oder mehrere, ausgewählt aus Salzmutterlauge, Salzen und Hydroxiden von Erdalkalimetallen und Gluconsäure-δ-lacton, ist.

3. Verfahren gemäss Anspruch 1, worin das Gerinnungsmittel in einer Menge von 2 bis 8 Gew.% auf Basis des Rohproteingehalts der Ausgangs-Sojabohnenmilch zugegeben wird.

4. Verfahren gemäss Anspruch 1, worin die Erwärmung durch ein direktes Hochtemperaturkurzzeit- oder Ultrahochtemperaturverfahren bei 120 bis 150°C für 2 bis 10 Sekunden durchgeführt wird.

5. Verfahren gemäss Anspruch 1, worin die Homogenisierung unter einem Druck von 5 bis 200 kg/cm² durchgeführt wird.

6. Verfahren gemäss Anspruch 1, worin die fermentierte Sojabohnenmilch einen pH von 3,5 bis 5,0 hat.

## Revendications

1. Procédé pour la production de lait de soja fermenté à l'acide lactique qui comprend l'ajout d'un agent coagulant les protéines de soja au lait de soja de départ, le chauffage du lait de soja de départ contenant l'agent coagulant entre 70°C et 150°C pendant 1 secondes à 10 minutes, l'homogénéisation du lait de soja chauffé et la soumission ensuite du lait de soja homogénéisé à une fermentation à l'acide lactique.

2. Procédé selon la revendication 1, dans lequel l'agent coagulant est un ou plusieurs membres sélectionnés parmi le groupe suivant : une eau mère, des sels et des hydroxydes de métaux alcalinoterreux et la δ-lactone gluconique.

3. Procédé selon la revendication 1, dans lequel l'agent coagulant est ajouté en quantité allant de 2% à 8% en poids basée sur la teneur en protéine brute du lait de soja de départ.

4. Procédé selon la revendication 1, dans lequel le chauffage est effectué par un procédé direct à haute température et courte durée ou un procédé à ultra-haute température entre 120°C et 150°C pendant 2 secondes à 10 secondes.

5. Procédé selon la revendication 1, dans lequel on effectue l'homogénéisation sous une pression entre 5 kg/cm² et 200 kg/cm².

6. Procédé selon la revendication 1, dans lequel le lait de soja fermenté a un pH entre 3,5 et 5,0.
